# EUROPÄISCHE PATENTSCHRIFT

(11) **EP 0 834 976 B1**
(45) Veröffentlichungstag und Bekanntmachung des Hinweises auf die Patenterteilung: **24.04.2002**
(21) Anmeldenummer: 97116581.6
(22) Anmeldetag: 23.09.1997
(51) Int. Cl.: H02H 9/02, H02H 3/08

(54) **Schaltungsanordnung mit elektronischer Sicherung**
Circuit with electronic fuse
Circuit avec fusible électronique

(30) Priorität: 07.10.1996 DE 19641269
(43) Veröffentlichungstag der Anmeldung: 08.04.1998
(73) Patentinhaber: SIEMENS AKTIENGESELLSCHAFT, 80333 München (DE)
(72) Erfinder: Semmler, Peter, Dipl.-Ing., 85368 Moosburg (DE)

(56) Entgegenhaltungen:
- EP-A- 0 541 876

## Beschreibung

Eine Sicherung soll eine weitere Energiezufuhr in ein fehlerhaftes Schaltungsteil verhindern und es dauerhaft von den restlichen Schaltungsteilen trennen, um Folgefehler wie z. B. Überhitzung oder Brand zu vermeiden. Im Fehlerfall überschreitet der in den Schaltungsteil fließende Strom den Auslösestrom einer Sicherung, daraufhin spricht diese an und trennt die fehlerhafte Schaltung ab.
Besitzt die zu schützende Schaltung beispielsweise große Eingangskapazitäten, so muß der in die Kapazitäten fließende Ladestrom begrenzt werden. Diese Strombegrenzung reduziert zum einen die Steckerbelastung beim Einstecken des Gerätes und schützt zum anderen die im Eingangskreis verwendeten Bauteile vor einer Überlastung durch den hohen Ladestrom. Von Nachteil ist dabei, daß die in der Schaltung eingesetzte Sicherung den Ladevorgang als Fehler erkennt und auslöst.

Überschreitet der in den defekten Schaltungsteil fließende Strom den Auslösestrom der Sicherung, so trennt eine Schmelzsicherung diesen Schaltungsteil ab. Ein weiterer Nachteil bei den bisher bekannten Schutzschaltungen ist, daß die Auslösezeit der Sicherung im wesentlichen vom fließenden Überlaststrom und der Trägheit der Sicherung abhängt. Eine Strombegrenzungsschaltung ist häufig notwendig, damit bei großen Eingangskondensatoren die Sicherung nicht bereits beim Einschalten (hoher Ladestrom) des Gerätes anspricht.

Daraus ergibt sich jedoch ein weiterer Nachteil, daß sich durch eine Strombegrenzung im Eingangskreis nicht nur der Ladestrom in die Eingangskapazitäten, sondern auch im Fehlerfall der in den defekten Schaltungsteil fließende Strom begrenzt wird. Im Fehlerfall ist die Verlustleistung in der Strombegrenzungsschaltung aber so hoch, daß diese noch vor dem Auslösen der Schmelzsicherung thermisch zerstört wird.

Die Auslösezeit einer Sicherung wird z. B. in die Gruppen: superflink, flink, mittelträge und träge unterteilt und unterliegt starken Schwankungen. Dies bringt den Nachteil mit sich, daß eine Auslösezeit sehr schwer auf die Anforderungen und Verhältnisse in einer Schaltung abgestimmt werden kann.

Aus der EP 0541876 A1 ist ein linearer I-Regler der über einen Meßwiderstand den Strom erfasst und über ein Steliglied den Strom begrenzt bekannt. Diese Schaltungsanordnung weist zudem ein Zeitglied zur verzögerten Einschaltung des Stellgliedes auf.

Der Erfindung liegt die Aufgabe zugrunde, eine Schaltungsanordnung einer Sicherung anzugeben, die nur im Fehlerfall auslöst.

Die Lösung der Aufgabe ergibt sich aus den Merkmalen des Patentanspruchs 1 und 9.

Die Erfindung zeichnet sich durch den Vorteil aus, daß die Sicherung extrem kurze Ansprechzeiten aufweist und unanfällig gegenüber Spannungsschwankungen ist die von der Spannungsversorgungsquelle verursacht werden.

Eine weitere vorteilhafte Ausgestaltung der Erfindung besteht darin, daß durch eine Strombegrenzungsschaltung zunächst der Strom in dem fehlerhaften Schaltungsteil bzw. der kapazitive Ladestrom begrenzt wird und erst nach Überschreiten einer Toleranzgrenze der Verbraucher von der Versorgungsspannung abgetrennt wird. Die neue Schaltung erkennt zuverlässig, ob der Eingriff der Strombegrenzung auf eine Überlast (Fehler) oder aber auf den Ladestrom der kapazitiven Last (Ladevorgang) zurückzuführen ist.

Ein weiterer Vorteil der erfindungsgemäßen Schaltungsanordnung ist, daß sie im Gegensatz zur Schmelzsicherung durch einen exakt dimensionierbaren Ansprechwert und eine sehr kurze Ansprechzeit aufweist und darüber hinaus unabhängig gegenüber auf Temperaturschwankungen und Bauteiletoleranzen ist.

Die neue elektronische Sicherung erkennt sowohl im eingeschwungenen Betrieb als auch während den Lade- bzw. Nachladevorgängen auftretende Überlasten zuverlässig und zeichnet sich durch sehr kurze Auslösezeiten aus. Eine schaltungstechnische Ausgestaltung des Fehlerdetektors verkürzt bei großen Überlasten die Ansprechzeiten noch weiter. Der Stromverbrauch der neuen elektronischen Sicherung ist im Normalbetrieb zu vernachlässigen. Durch die Strombegrenzerschaltung ist der maximal fließende Strom in der zu überwachenden Schaltung begrenzt. Die Toleranzen der verwendeten Bauteile wirken sich nicht auf die Funktion der Schaltung aus.

Weitere Besonderheiten der Erfindung werden aus den nachfolgenden näheren Erläuterungen eines Ausführungsbeispiels gemäß der Erfindung anhand der Zeichnungen ersichtlich.

Es zeigen:
- Fig 1: ein Prinzipschaltbild einer elektronischen Sicherung,
- Fig 2: eine schaltungstechnische Ausgestaltung,
- Fig 3: Spannungsverhältnisse,
- Fig 4: eine Weiterbildung der elektronischen Sicherung und
- Fig 5a bis 5d: weitere Ausführungsvarianten von Teilschaltungen der elektronischen Sicherung.

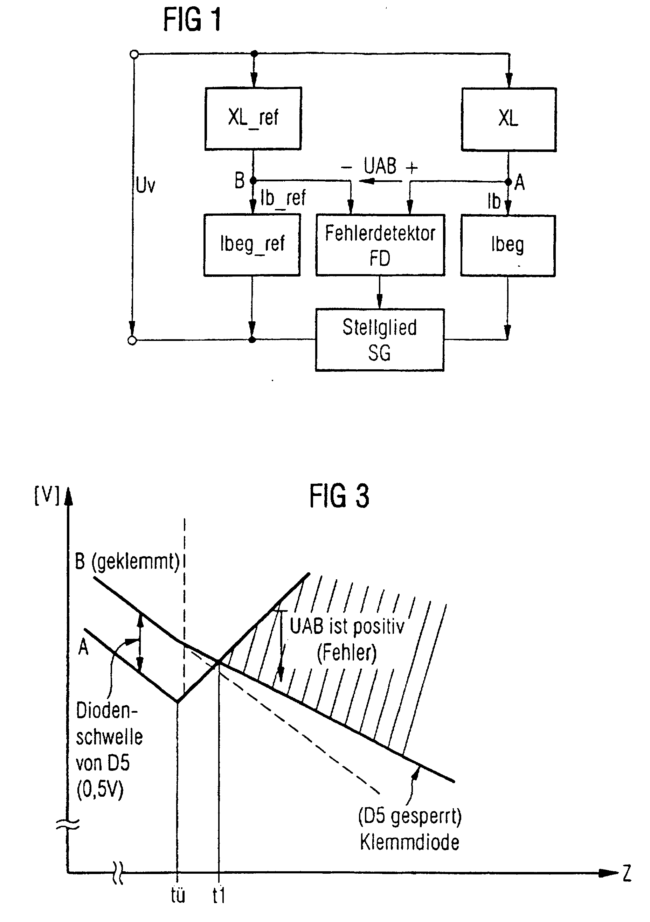

Das in Fig 1 dargestellte Funktionsprinzip wird nachfolgend kurz beschrieben. Im eingeschwungenen Betrieb ist die Strombegrenzungsschaltung nicht aktiv, sie spricht aber sowohl beim Laden der Eingangskondensatoren (Ladestrom) als auch bei einer Überlast (Fehler) an. Die Schaltung vergleicht während des Eingriffs der Strombegrenzungsschaltung die Spannungsverhältnisse an dem zu überwachenden Schaltungsteil mit den Spannungsverhältnissen einer Referenzschaltung. Treten hierbei Differenzen auf, so wird dies als Fehler gewertet und der defekte Schaltungsteil von der Versorgungsleitung abgetrennt. Die Referenzschaltung stellt eine Nachbildung der Lastimpedanz XL der zu überwachenden Schaltung und deren Strombegrenzungsschaltung Ibeg dar.

Die Referenzschaltung besteht aus den Schaltungselementen XL_ref und Ibeg_ref, wobei mit XL_ref die in der zu schützenden Schaltung vorhandene Eingangsimpedanz XL mit der Stromquelle Ibeg_ref ein Strom Ib_ref als Abbild von Ib erzeugt wird. Werden die Elemente der Referenzschaltung so gewählt, daß die Verhältnisse Ib_ref/XL_ref den Verhältnissen der zu überwachenden Schaltung Ib/XL entsprechen (Ib_ref und XL_ref stellen ein proportionales Abbild der zu schützenden Schaltung dar), so ergeben sich an den Schaltungspunkten A und B die gleichen Spannungsverhältnisse. Es tritt keine positive Spannungsdifferenz UAB auf. Im Fehlerfall entspricht die Eingangsimpedanz XL bzw. die Strombegrenzung Ib nicht mehr dem Abbild in der Referenzschaltung, wodurch sich auch die Spannungsverhältnisse an den Schaltungspunkten A und B verschieben. Eine positive Spannungsdifferenz UAB, d.h. die Spannung am Punkt A ist höher als am Schaltungspunkt B, wird als Fehler gewertet, und der defekte Schaltungsteil wird von der Versorgungsspannung abgetrennt (Stellglied wird hochohmig geschaltet).

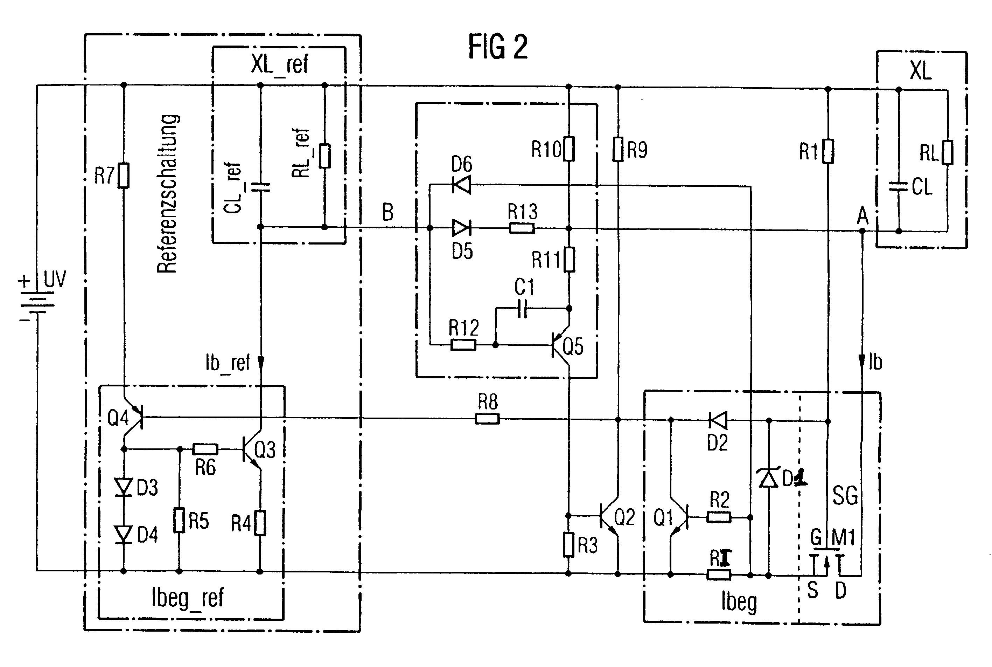

In Fig 2 ist eine schaltungstechnische Ausgestaltung der erfindungsgemäßen elektronischen Sicherung abgebildet. Eine mögliche Anwendung der neuen Schaltung ist ein DC-DC-Konverter, da dessen Eingangsimpedanz XL überwiegend kapazitiv ist. Beim Anlegen der Versorgungsspannung an den DC-DC-Konverter (Einstecken der Baugruppe), wird der in die Eingangsimpedanz fließende (Lade-)Strom begrenzt. Während des Normalbetriebes aber auch während des Ladevorganges (Laden der Eingangskapazitäten) muß der DC-DC-Konverter vor Überlast durch eine Sicherung geschützt werden. Durch einen exakt dimensionierbaren Einsatzstrom und eine kurze Ansprechzeit der erfindungsgemäßen elektronischen Sicherung ist der DC-DC-Konverter in allen Betriebsfällen vor Folgefehler, wie Überlastung von Bauelementen, Brand etc., geschützt.

Solange der Eingangsstrom unterhalb der Schaltschwelle von Q1 ist (Normalbetrieb), liegt an dessen Kollektor über den Pullup-Widerstand R9 ein Versorgungsspannungspotential. Die Diode D2 entkoppelt den Kollektor von Q1 von der Zenerdiode D1. Solange weder Q1 noch Q2 aktiv ist, ist einerseits der Transistor Q4 über R8 und R9 sicher gesperrt, andererseits ist über R1 der Strombremsentransistor M1 (Stellglied) voll durchgesteuert. Die Zenerdiode D1 begrenzt dabei die Gate-Source-Spannung an M1. Über den Strommeßwiderstand RI wird der in die Eingangsimpedanz XL fließende Eingangsstrom gemessen. Überschreitet der fließende Eingangsstrom die Basis-Emitter-Schwelle des Transistors Q1 (Ladevorgang, Fehler), so verringert dieser über die Diode D2 die Gate-Source-Spannung des Stellgliedes M1 wodurch der maximal fließende Eingangsstrom auf Ib begrenzt wird.

Beim Eingreifen der Strombegrenzungsschaltung wird über Q1 auch der Transistor Q4 leitend gesteuert. Somit kann ein Strom über R7 fließen und die Konstantstromquelle Ibeg_ref aktivieren. Wie im Funktionsprinzip beschrieben, bildet die Stromquelle Ibeg_ref die Verhältnisse an der aktiven Strombegrenzungsschaltung Ibeg proportional nach. Bei der realisierten Schaltung kompensieren die Dioden D3 und D4 zum einen die Basis-Emitter-Spannung des Transistors Q3 und stellen zum anderen die Referenzspannung der Stromquelle Ibeg_ref dar. Der Transistor Q3 stellt den Referenzstrom Ibref so ein, daß der entstehende Spannungsabfall an R4 einer Diodenschwelle entspricht. Mit dem Widerstandsverhältnis R4 zu RI wird ein Proportionalitätsfaktor der Referenzschaltung eingestellt. Da sowohl in der Strombegrenzungsschaltung Ibeg als auch in der Stromquelle Ibeg_ref die Referenzspannung aus einer Basis-Emitter-Strecke bzw. einer Diodenschwelle besteht, ist das proportionale Stromverhältnis Ib/Ib_ref unabhängig von der Temperatur. Mit dem Strom Ib_ref wird die nachgebildete Eingangsimpedanz XL_ref, bestehend aus CL_ref und RL_ref (CL_ref/RL_ref) geladen.

Der Fehlerdetektor überwacht die Differenzspannung UAB zwischen den Schaltungspunkten A und B. Überschreitet diese eine frei dimensionierbare Schaltschwelle, so wird dies als Fehler gewertet und die Sicherung löst aus.

Die Referenzuschaltungselemente bestehend aus XL_ref und Ibeg_ref werden so dimensioniert, daß der Ladevorgang von XL_ref etwas länger dauert als der maximal mögliche Ladevorgang der Eingangsimpedanz. Hierdurch ist sichergestellt, daß im Normalbetrieb die Spannung am Schaltungspunkt B höher liegt als am Schaltungspunkt A, d.h. UAB ist negativ. Nur positive Differenzspannungen UAB werden als Fehler interpretiert. Durch diese Dimensionierung wirken sich die in einer realen Schaltung immer vorhandenen Toleranzen der zu überwachenden Eingangsimpedanz, der Strombegrenzungsschaltung bzw. die Toleranz der Referenzschaltungselemente nicht auf die Schaltungsfunktion aus.

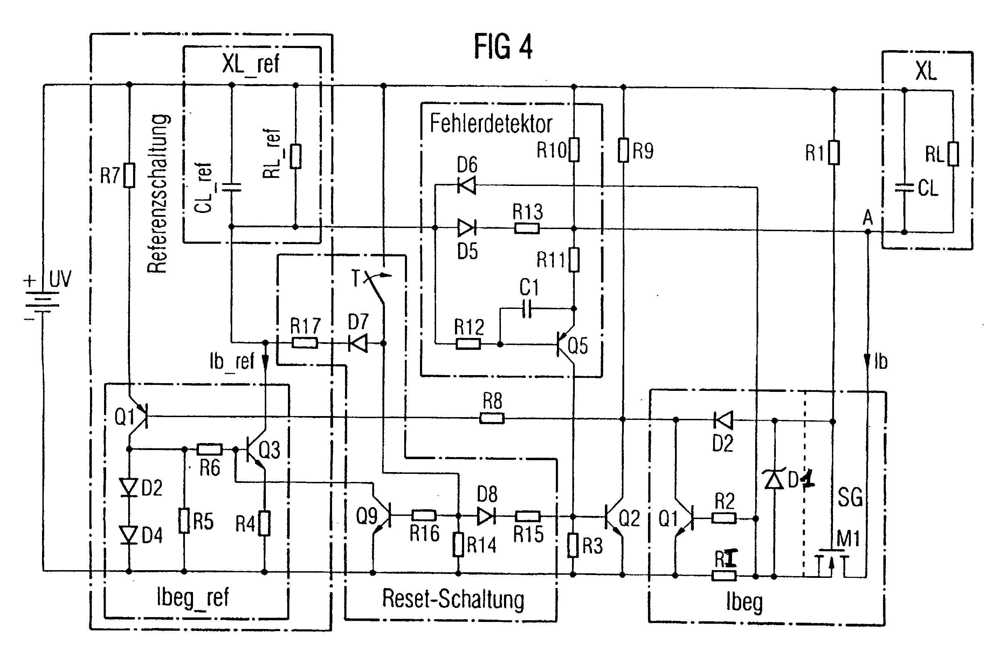

In Fig 3. sind die Spannungsverhältnisse während des Ladevorganges von XL bzw. XL_ref an den Schaltungspunkten A und B dargestellt. Ein schnelles Erkennen eines Fehlers, d.h. UAB wird positiv, erreicht man durch das Führen der Spannung am Schaltungspunkt B durch die Spannung am Schaltungspunkt A. D5 und R13 klemmen deshalb die Spannung an B auf die Spannung am Schaltungspunkt A.

Tritt während des Ladevorgangs der Eingangsimpedanz XL ein Fehler auf, sinkt die Spannung am Schaltungspunkt A nicht mehr wie dargestellt, sondern es ergibt sich entsprechend der Impedanz des auftretenden Fehlers eine Spannungskennlinie im Überlastbereich. Die Diode D5 sperrt, die Spannung am Schaltungspunkt B ist nicht mehr geführt, d.h. die Spannung am Schaltungspunkt B sinkt entsprechend der Dimensionierung der Referenzschaltung.

Ab dem Schnittpunkt der Spannung am Schaltungspunkt A mit der Spannung am Schaltungspunkt B zur Zeit t1 wird die Differenzspannung UAB positiv. Bei einer positiven Spannung zwischen den Schaltungspunkten A und B fließt über die Widerstände R11 und R12 ein Basisstrom in den Transistor Q5. Die Zeitkonstante, bestimmt durch R11, R12 und C1, unterdrückt kurzzeitige Störungen. Je höher die Differenzspannung UAB im Fehlerfall wird, desto schneller wird C1 geladen, was die Abschaltzeit bei großen Überlasten, wie z.B. Kurzschluß, noch verkürzt. Steuert UAB den Transistor Q5 leitend, so wird auch der Transistor Q2 durchgesteuert, der über die Diode D2 das Stellglied der elektronischen Sicherung verzichtet und der Strombremsentransistor M1 für das Abschalten des defekten Schaltungsteils verwendet.

Über den Widerstand R8 bleibt die Referenzstromquelle Ibeg_ref aktiv geschaltet, wodurch die positive Spannungsdifferenz UAB weiter erhalten bleibt. Das Stellglied der Sicherung, hier identisch mit dem Strombremsentransistor M1, bleibt dauerhaft gesperrt, die elektronische Sicherung hat ausgelöst. Ein Zurücksetzen der Sicherung (Reset) wird in dieser Schaltung durch das Abschalten der Versorgungsspannung (z.B.: Ziehen der Baugruppe) erreicht.

Kann der Ladevorgang der Eingangskapazitäten ohne einen auftretenden Fehler abgeschlossen werden, reduziert sich der fließende Strom auf den statischen Eingangsstrom der zu überwachenden Schaltung. Die Strombegrenzungsschaltung Ibeg ist nicht mehr aktiv, da der Spannungsabfall über RI nicht mehr ausreicht, den Transistor Q1 durchzusteuern. Über die Widerstände R8 und R9 wird Q4 und somit die Stromquelle Ibeg_ref ebenfalls gesperrt. Über die Diode D5 und den Widerstand R13 wird die Spannung über XL_ref auf die Spannung über XL geklemmt. Das Stellglied M1 ist voll durchgesteuert, somit liegt D6 antiparallel zu D5, was den Fehlerdetektor deaktiviert. Bei einem auftretenden Eingangsspannungseinbruch baut sich aufgrund der Dimensionierung der Referenzschaltung die Spannung über XL schneller ab als an XL_ref. Über den voll durchgesteuerten Transistor M1 und D6 wird in diesem Betriebsfall die Spannung an XL_ref auf die an XL anliegenden Spannung geklemmt.

Nimmt hingegen der Transistor M1 durch das Eingreifen der Strombegrenzungsschaltung Spannung auf, ist die Diode D6 wirkungslos und der Fehlerdetektor wird wieder freigegeben (reaktiviert).

### Eingreifen der Strombegrenzungsschaltung während des Normalbetriebes

Im eingeschwungenen Zustand, d.h. die Ladevorgänge sind abgeschlossen, ist die Strombegrenzungsschaltung Ibeg nicht aktiv. Spricht nun die Strombegrenzung während des Normalbetriebes an, sind zwei Fälle zu unterscheiden.

### 1. Fall: Nachladen der Eingangsimpedanz

Eine Erhöhung der Eingangsspannung Uv bewirkt ein Nachladen der Eingangsimpedanz XL. Der Ladestrom wird dabei durch die Strombegrenzungsschaltung auf Ib begrenzt. In der Referenzschaltung läuft der Ladevorgang proportional zum Ladevorgang an der Eingangsimpedanz ab. Es entsteht keine positive Spannungsdifferenz zwischen den Schaltungspunkten A und B; die neue Sicherung löst nicht aus.

### 2. Fall: Fehler in der zu überwachenden Schaltung

Beim Auftreten einer Überlast (Fehler) wird durch das Eingreifen der Strombegrenzungsschaltung der fließende Strom ebenfalls auf Ib begrenzt. Der Stelltransistor M1 nimmt dabei Spannung auf, wodurch sich der Schaltungspunkt A nach oben verschiebt.

Wie aus der Schaltungsbeschreibung ersichtlich, wird durch das Einsetzen der Strombegrenzungsschaltung auch die Stromquelle Ibeg_ref aktiviert, wodurch sich die Spannung am Schaltungspunkt B verringert. In Folge dieser gegensätzlichen Spannungsänderung an den Schaltungspunkten A und B entsteht eine positive Differenzspannung UAB. Überschreitet die Spannung UAB die durch Q5, R11 und R3 bestimmte Vergleichsspannung, schaltet der Transistor Q5 durch. Der Durch Q5 fließende Kollektorstrom steuert Q2 an, der über D2 den Stelltransistor M1 dauerhaft sperrt. Die elektronische Sicherung hat angesprochen. Der Stelltransistor M1 kann außerhalb der Strombegrenzungsschaltung Ibeg oder innerhalb der Strombegrenzungsschaltung Ibeg angeordnet werden.

Eine weitere Ausgestaltung der Schaltungsanordnung ist in Fig 4 dargestellt. Bei dieser Schaltungsausgestaltung ist eine Resetschaltung zum Zurücksetzen in die in Fig. 2 gezeigten Schaltungsausgestaltung gezeigt.

Durch das Drücken des Tasters T schaltet Q9 und Q2 durch. Mit Q2 wird der Stelltransistor M1, mit Q9 der Transistor Q3 sicher gesperrt. Durch das Sperren von Q3 wird die Stromquelle Ibeg_ref abgeschaltet, und XL_ref kann sich über D7 und R17 entladen Wird der Taster T solange betätigt, daß sich XL_ref vollständig entladen kann, ist die elektronische Sicherung nach dem Öffnen des Tasters wieder voll funktionsfähig.

Der Taster T kann auch durch einen Transistor, ein Relais, einen Optokoppler etc. ersetzt werden, wobei durch eine geeignete Ansteuerung auch aufprüfende Sicherungen realisiert werden können.

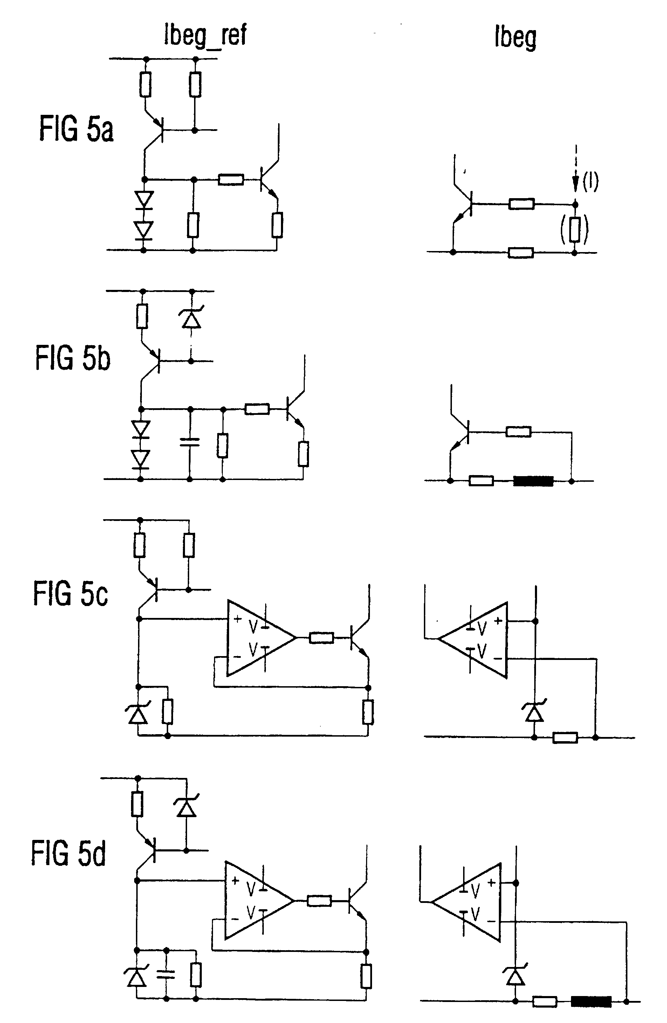

Weitere Ausgestaltungen von Strombegrenzer- Ibeg und Referenz-Strombegrenzereinheiten Ibeg_ref sind in den Figuren 5a bis 5d dargestellt.

## Patentansprüche

1. Verfahren zum Abtrennen eines Verbrauchers von einer Versorgungsspannung (UV) bei Überlast, wobei der Verbraucher (XL) mit einer Strombegrenzereinheit (Ibeg) eine erste Serienschaltung bildet,
**dadurch gekennzeichnet,**
**daß** zu dieser eine zweite Serienschaltung mit einem Referenz-Verbraucher (XL_ref) und einer Referenz-Strombegrenzereinheit (Ibeg_ref) parallel geschaltet ist, wobei die Elemente der zweiten Serienschaltung so gewählt sind, daß die Verhältnisse Ib_ref/XL_ref den Verhältnissen Ib/XL der ersten Serienschaltung entsprechen und wobei die Eingangsimpedanz der Referenz-Verbraucher (XL_ref) die Eingangsimpedenz der Verbraucher (XL) nachbildet,
**daß** die am Verbraucher (XL) anliegende erste Spannung (UA) mit der am Referenz-Verbraucher (XL_ref) anliegenden zweiten Spannung (UB) verglichen wird,
**daß** bei Überschreiten einer vorgegebenen Spannungsdifferenz zwischen der ersten und zweiten Spannung der Verbraucher (XL) von der Versorgungsspannung (UV) abgetrennt wird.

2. Verfahren nach Anspruch 1,
**dadurch gekennzeichnet,**
**daß** der Referenz-Verbraucher (XL_ref) und die Referenz-Strombegrenzereinheit (Ibeg_ref) an die Versorgungsspannung angeschlossen wird.

3. Verfahren nach Anspruch 1,
**dadurch gekennzeichnet,**
**daß** die Referenz-Strombegrenzereinheit (Ibeg_ref) erst nach Einsetzen der Strombegrenzung in der Strombegrenzereinheit (Ibeg) aktiviert wird.

4. Verfahren nach Anspruch 1,
**dadurch gekennzeichnet,**
**daß** bei Spannungschwankungen bei der Versorgungsspannung (UV) sich die Spannung am Referenz-Verbraucher (XL_ref) langsamer ändert als beim Verbraucher (XL).

5. Verfahren nach Anspruch 1,
**dadurch gekennzeichnet,**
**daß** so dimensioniert wird daß einschließlich Bauteiletoleranzen in der ersten und zweiten Serienschaltung die am Referenz-Verbraucher (XL-ref) anliegende Spannung höher ist als die am Verbraucher (XL) anliegende Spannung.

6. Verfahren nach Anspruch 1,
**dadurch gekennzeichnet,**
**daß** im fehlerfreien Betrieb die am Referenz-Verbraucher (XL_ref) anliegende Spannung durch die am ersten Verbraucher (XL) anliegende erste Spannung geführt wird.

7. Verfahren nach Anspruch 1,
**dadurch gekennzeichnet,**
**daß** bei Spannungseinbrüchen in der Versorgungsspannung (UV) im fehlerfreien Betrieb der Fehlerdetektor (FD) deaktiviert wird.

8. Verfahren nach Anspruch 1,
**dadurch gekennzeichnet,**
**daß** mit einem Ausgangssignal des Fehlerdetektors (FD) ein Schaltelement (M1) angesteuert wird und daß den Verbraucher (XL) von der Versorgungsspannung (UV) trennt und
**daß** der Verbraucher (XL) bis zu einer Rücksetzprozedur (Reset) von der Versorgungsspannung (UV) getrennt bleibt.

9. Schaltungsanordnung mit elektronischer Sicherung mit einer Abschalteinheit (SG) zum Abtrennen des Verbrauchers (XL) von einer Versorgungsspannung (UV), wobei der Verbraucher (XL) mit einer Strombegrenzereinheit (Ibeg) eine erste Serienschaltung bildet,
**dadurch gekennzeichnet,**
**daß** parallel zur ersten Serienschaltung eine zweite Serienschaltung mit einem Referenz-Verbraucher (XL-ref) und einer Referenz-Strombegrenzereinheit (Ibeg-ref) angeordnet ist, wobei die Elemente der zweiten Serienschaltung so gewählt sind, daß die Verhältnisse Ib_ref/XL_ref den Verhältnissen Ib/XL der ersten Serienschaltung entsprechen und wobei die Eingangsimpedanz der Referenz-Verbraucher (XL_ref) die Eingangsimpedenz der Verbraucher (XL) nachbildet,
**daß** ein Ausgang des Verbrauchers (XL) mit einem ersten Eingang eines Fehlerdetektors (FD) und ein Ausgang des Referenz-Verbrauchers (XL-ref) mit einem zweiten Eingang des Fehlerdetektors (FD) verbunden ist und
**daß** ein Ausgang des Fehlerdetektors mit einem Eingang der Abschalteeinheit (SG) verbunden ist.

10. Schaltungsanordnung nach Anspruch 9,
**dadurch gekennzeichnet,**
**daß** ein Ausgang der Strombegrenzereinheit (Ibeg) mit einem zweiten Eingang der Referenz-Strombegrenzereinheit (Ibeg-ref) verbunden ist, wobei bei Überlast im Verbrauchers (XL) die Referenz-Strombegrenzereinheit (Ibeg-ref) aktivierbar ist.

11. Schaltungsanordnung nach Anspruch 9,
**dadurch gekennzeichnet,**
**daß** der erste und der zweite Eingang des Fehlerdetektors (FD) durch eine Serienschaltung mit einer ersten Diode (D5) und einen Widerstand (R13) verbunden ist,
**daß** die Basis eines ersten Transistors (Q5) über einen Widerstand (R12) mit dem zweiten Eingang und der Emitteranschluß über einen weiteren Widerstand (R11) am ersten Eingang des Fehlerdetektors (FD) verbunden ist,
**daß** parallel zur Basis-Emitter Strecke des ersten Transistors (Q5) eine Kapazität (C1) vorgesehen ist,
**daß** der Kollektoranschluß des ersten Transistors (Q5) mit dem Basisanschluß eines zweiten Transistors (Q2) verbunden ist, wobei der Emitteranschluß des zweiten Transistor (Q2) mit dem Sourceanschluß des Schaltelementes (M1) in der Abschalteeinheit (SG) und der Kollektoranschluß des zweiten Transistors (Q2) mit dem Gateanschluß des Schaltelements (M1) verbunden ist.

12. Schaltungsanordnung nach Anspruch 9,
**dadurch gekennzeichnet,**
**daß** ein Anschluß einer zweiten Diode (D6) an dem zweiten Eingang des Fehlerdetektors (FD) und der weitere Anschluß der Diode (D6) mit dem Emitteranschluß des zweiten Transistors (Q2) verbunden ist,
**daß** in der Strombegrenzereinheit (Ibeg) ein dritter Transistor (Q1) angeordnet ist,
**daß** zwischen Basis- und Emitteranschluß des dritten Transistors (Q1) ein Meßwiderstand (RI) angeordnet ist und
**daß** der Kollektoranschluß der dritten Transistors (Q1) über eine Entkoppel-Diode (D2) mit dem Steuereingang (G) des Schaltelements (M1) verbunden ist.

## Claims

1. Method of disconnecting a load from a supply voltage (UV) in the event of overloading, the load (XL) forming a first series connection with a current limiter unit (Ibeg), **characterized in that** a second series connection with a reference load (XL_ref) and a reference current limiter unit (Ibeg_ref) is connected in parallel with the first series connection, the elements of the second series connection being chosen such that the ratios Ib_ref/XL_ref correspond to the ratios Ib/XL of the first series connection, and the input impedance of the reference load (XL_ref) simulating the input impedance of the load (XL), **in that** the first voltage (UA), present at the load (XL), is compared with the second voltage (UB), present at the reference load (XL_ref), and **in that**, if a predetermined voltage difference between the first and second voltages of the loads (XL) is exceeded, disconnection from the supply voltage (UV) takes place.

2. Method according to Claim 1, **characterized in that** the reference load (XL_ref) and the reference current limiter unit (Ibeg_ref) are connected to the supply voltage.

3. Method according to Claim 1, **characterized in that** the reference current limiter unit (Ibeg_ref) is activated only after commencement of the current limitation in the current limiter unit (Ibeg).

4. Method according to Claim 1, **characterized in that**, in the event of voltage fluctuations in the case of the supply voltage (UV), the voltage at the reference load (XL_ref) changes more slowly than the voltage at the load (XL).

5. Method according to Claim 1, **characterized in that** dimensioning is carried out such that, including component tolerances in the first and second series connections, the voltage present at the reference load (XL-ref) is higher than the voltage present at the load (XL).

6. Method according to Claim 1, **characterized in that**, in faultless operation, the voltage present at the reference load (XL_ref) is guided by the first voltage present at the first load (XL).

7. Method according to Claim 1, **characterized in that**, in the event of voltage dips in the supply voltage (UV) in faultless operation, the fault detector (FD) is deactivated.

8. Method according to Claim 1, **characterized in that** an output signal of the fault detector (FD) is used to activate a switching element (M1) and disconnect the load (XL) from the supply voltage (UV) and **in that** the load (XL) remains disconnected from the supply voltage (UV) until a resetting procedure (Reset).

9. Circuit with electronic fuse with a disconnecting unit (SG) for disconnecting the load (XL) from a supply voltage (UV), the load (XL) forming a first series connection with a current limiter unit (Ibeg), **characterized in that** a second series connection with a reference load (XL_ref) and a reference current limiter unit (Ibeg_ref) is arranged in parallel with the first series connection, the elements of the second series connection being chosen such that the ratios Ib_ref/XL_ref correspond to the ratios Ib/XL of the first series connection, and the input impedance of the reference load (XL_ref) simulating the input impedance of the load (XL), **in that** an output of the load (XL) is connected to a second input of a fault detector (FD) and an output of the reference load (XL-ref) is connected to a first input of the fault detector (FD) and **in that** an output of the fault detector is connected to an input of the disconnecting unit (SG).

10. Circuit according to Claim 9, **characterized in that** an output of the current limiter unit (Ibeg) is connected to a second input of the reference current limiter unit (Ibeg-ref), it being possible in the event of overloading in the load (XL) for the reference current limiter unit (Ibeg-ref) to be activated.

11. Circuit according to Claim 9, **characterized in that** the first input and second input of the fault detector (FD) are connected by a series connection to a first diode (D5) and a resistor (R13), **in that** the base of a first transistor (Q5) is connected via a resistor (R12) to the second input and the emitter terminal is connected via a further resistor (R11) to the first input of the fault detector (FD), **in that** a capacitance (C1) is provided in parallel with the base-emitter junction of the first transistor (Q5), and **in that** the collector terminal of the first transistor (Q5) is connected to the base terminal of a second transistor (Q2), the emitter terminal of the second transistor (Q2) being connected to the source terminal of the switching element (M1) in the disconnecting unit (SG) and the collector terminal of the second transistor (Q2) being connected to the gate terminal of the switching element (M1).

12. Circuit according to Claim 9, **characterized in that** one terminal of a second diode (D6) is connected to the second input of the fault detector (FD) and the further terminal of the diode (D6) is connected to the emitter terminal of the second transistor (Q2), **in that** a third transistor (Q1) is arranged in the current limiter unit (Ibeg), **in that** a measuring resistor (RI) is arranged between the base terminal and the emitter terminal of the third transistor (Q1) and **in that** the collector terminal of the third transistor (Q1) is connected via a decoupling diode (D2) to the control input (G) of the switching element (M1).

## Revendications

1. Procédé pour couper un consommateur d'une tension d'alimentation (UV) en cas de surcharge, le consommateur (XL) formant, avec une unité de limitation de courant (Ibeg), un premier montage en série,
**caractérisé en ce que**
un second montage en série muni d'un consommateur de référence (XL_ref) et d'une unité de référence de limitation de courant (Ibeg_ref) étant installé en parallèle à ce premier montage en série, les éléments du second montage en série étant sélectionnés de telle manière que les rapports lb_ref/XL_ref correspondent aux rapports Ib/XL du premier montage en série et l'impédance d'entrée des consommateurs de référence (XL_ref) simulant l'impédance d'entrée des consommateurs (XL),
**en ce que** la première tension (UA) présente sur le consommateur (XL) est comparée à la seconde tension (UB) présente sur le consommateur de référence (XL_ref),
**en ce que**, en cas de dépassement d'une différence de tension prédéfinie entre la première et la seconde tension, le consommateur (XL) est coupé de la tension d'alimentation (UV).

2. Procédé selon la revendication 1,
**caractérisé en ce que**
le consommateur de référence (XL_ref) et l'unité de référence de limitation de courant (Ibeg_ref) sont raccordés à la tension d'alimentation.

3. Procédé selon la revendication 1,
**caractérisé en ce que**
l'unité de référence de limitation de courant (Ibeg_ref) est activée seulement après le déclenchement de la limitation de courant dans l'unité de limitation de courant (Ibeg).

4. Procédé selon la revendication 1
**caractérisé en ce que**,
en cas de variations de tension dans la tension d'alimentation (UV), la tension sur le consommateur de référence (XL_ref) se modifie plus lentement que sur le consommateur (XL).

5. Procédé selon la revendication 1,
**caractérisé en ce que**,
il est dimensionné de telle sorte que, y compris les tolérances des composants du premier et du second montage en série, la tension présente sur le consommateur de référence (XL_ref) est supérieure à la tension présente sur le consommateur (XL).

6. Procédé selon la revendication 1,
**caractérisé en ce que**,
en cas de service sans défaillance, la tension présente sur le consommateur de référence (XL_ref) est menée par la première tension présente sur le premier consommateur (XL).

7. Procédé selon la revendication 1,
**caractérisé en ce que**,
en cas de chutes de tension dans la tension d'alimentation (UV) en service sans défaillance, le détecteur de défauts (FD) est désactivé.

8. Procédé selon la revendication 1,
**caractérisé en ce que**
un élément de commutation (M1) est commandé par un signal de sortie du détecteur de défauts (FD) et coupe le consommateur (XL) de la tension d'alimentation (UV) et **en ce que** le consommateur (XL) reste coupé de la tension d'alimentation (UV) jusqu'à un processus de remise à l'état initial (reset).

9. Circuit avec fusible électronique muni d'une unité de coupure (SG) pour couper le consommateur (XL) d'une tension d'alimentation (UV), le consommateur (XL) formant, avec une unité de limitation de courant (Ibeg), un premier montage en série,
**caractérisé en ce que**
un second montage en série muni d'un consommateur de référence (XL-ref) et d'une unité de référence de limitation de courant (Ibeg-ref) est installé en parallèle au premier montage en série, les éléments du second montage en série étant sélectionnés de telle manière que les rapports lb_ref/XL_ref correspondent aux rapports Ib/XL du premier montage en série, et l'impédance d'entrée des consommateurs de référence (XL_ref) simulant l'impédance d'entrée des consommateurs (XL),
**en ce qu'**une sortie du consommateur (XL) est connectée à une première entrée d'un détecteur de défauts (FD) et **en ce qu'**une sortie du consommateur de référence (XL-ref) est connectée à une seconde entrée du détecteur de défauts (FD) et **en ce qu'**une sortie du détecteur de défauts est connectée à une entrée de l'unité de coupure (SG).

10. Circuit selon la revendication 9,
**caractérisé en ce que**,
une sortie de l'unité de limitation de courant (Ibeg) est connectée à une seconde entrée de l'unité de référence de limitation de courant (Ibeg-ref), l'unité de référence de limitation de courant (Ibeg-ref) pouvant être activée en cas de surcharge dans le consommateur (XL).

11. Circuit selon la revendication 9,
**caractérisé en ce que**
la première et la seconde entrée du détecteur de défauts (FD) sont connectées à une première diode (D5) et à une résistance (R13) par un montage en série,
**en ce que** la base d'un premier transistor (Q5) est connectée à la seconde entrée du détecteur de défauts (FD) par l'intermédiaire d'une résistance (R12) et **en ce que** la borne d'émetteur est connectée à la première entrée du détecteur de défauts (FD) par l'intermédiaire d'une autre résistance (R11),
**en ce qu'**une capacité (C1) est prévue parallèlement au trajet base-émetteur du premier transistor (Q5),
**en ce que** la borne de collecteur du premier transistor (Q5) est connectée à la borne de base d'un deuxième transistor (Q2), la borne d'émetteur du deuxième transistor étant connectée à la borne source de l'élément de commutation (M1) dans l'unité de coupure (SG) et la borne de collecteur du deuxième transistor (Q2) étant connectée à la borne grille de l'élément de commutation (M1).

12. Circuit selon la revendication 9,
**caractérisé en ce que**,
une borne d'une seconde diode (D6) est connecté à la seconde entrée du détecteur de défauts (FD) et **en ce que** l'autre borne de la diode (D6) est connectée à la borne d'émetteur du deuxième transistor (Q2),
**en ce qu'**un troisième transistor (Q1) est placé dans l'unité de limitation de courant (Ibeg),
**en ce que**, entre la borne de base et la borne d'émetteur du troisième transistor (Q1), est placée une résistance de mesure (RI) et **en ce que** la borne de collecteur du troisième transistor (Q1) est connectée à l'entrée de commande (G) de l'élément de commutation (M1) par une diode de découplage (D2).
